# FASCICULE DE BREVET EUROPEEN

(11) **EP 3 227 392 B1**
(45) Date de publication et mention de la délivrance du brevet: **15.07.2020**
(21) Numéro de dépôt: 15822964.1
(22) Date de dépôt: 01.12.2015
(51) Int. Cl.: C09C 1/42

(54) **AGENTS D'AIDE A LA DISPERSION ET/OU AU BROYAGE DU KAOLIN EN SUSPENSION AQUEUSE, SUSPENSIONS AQUEUSES OBTENUES ET LEURS UTILISATIONS**
MITTEL ZUR UNTERSTÜTZUNG DER DISPERSION UND/ODER ZERKLEINERUNG VON KAOLIN IN WÄSSRIGER SUSPENSION, HERGESTELLTE WÄSSRIGE SUSPENSIONEN UND VERWENDUNGEN DAVON
AGENTS FOR AIDING THE DISPERSION AND/OR MILLING OF KAOLIN IN AQUEOUS SUSPENSION, AQUEOUS SUSPENSIONS OBTAINED AND USES THEREOF

(30) Priorité: 03.12.2014 FR 1461845
(43) Date de publication de la demande: 11.10.2017
(73) Titulaire: COATEX, 69730 Genay (FR)
(72) Inventeur: MONGOIN, Jacques, 69650 Quincieux (FR); JACQUEMET, Christian, 69005 Lyon (FR); MATTER, Yves, 69650 Quincieux (FR); SUAU, Jean-Marc, 69480 Lucenay (FR)
(74) Mandataire: Balmefrezol, Ludovic Francis Pierre
(86) Numéro de dépôt international: PCT/FR2015/053275
(87) Numéro de publication internationale: WO 2016/087765

(56) Documents cités:
- US-A- 4 742 105
- US-A1- 2008 146 715
- US-B1- 6 390 301

## Description

La présente invention concerne le domaine technique des agents d'aide à la dispersion et/ou au broyage du kaolin en suspension aqueuse.

Plus précisément, la présente invention concerne un mélange ternaire consistant en au moins un homopolymère ou copolymère de l'acide (méth)acrylique, partiellement ou totalement neutralisé au sodium, au potassium, au lithium et/ou avec une amine, au moins une solution de silicate ou métasilicate choisie dans le groupe consistant en le silicate de sodium de formule Na₂O.nSiO₂ (avec n variant entre 1 et 4), un métasilicate de sodium Na₂O₃Si et/ou un silicate de potassium K₂O.nSiO₂ (avec n variant entre 1 et 4), le métasilicate de potassium K₂SiO₃ et au moins une base, comme agents d'aide à la dispersion et/ou au broyage du kaolin en suspension aqueuse. Ces silicates permettent de réduire la quantité d'homopolymères ou de copolymères de l'acide (méth)acrylique mis en œuvre, et ce, pour un niveau de performance équivalent en matière de rhéologie et de granulométrie des suspensions.

Le kaolin est un pigment inorganique obtenu classiquement par des procédés d'extraction du minerai, de broyage, de délamination puis éventuellement de traitement et de classification. Le kaolin est utilisé en tant que charge dans le papier pour préparer des sauces de couchage du papier, en tant que pigment dans les peintures, le caoutchouc, les résines, etc. On trouve le kaolin sous forme de poudre sèche ou sous forme de dispersion ou suspension aqueuse. Le kaolin est, par exemple, introduit dans la sauce de couchage sous forme d'une dispersion ou d'une suspension aqueuse présentant, pour des raisons économiques et techniques, un extrait sec élevé : au moins 60 %, préférentiellement 70 %, très préférentiellement 72 % en poids sec de kaolin. Par « extrait sec », on entend la teneur en poids sec du kaolin par rapport au poids total de la suspension ou de la dispersion aqueuse considérée.

Le kaolin, tout comme les matières minérales de manière générale, doit être traité avant de pouvoir être utilisé.

Par exemple, il doit être broyé en particules fines et/ou homogènes. Les procédés de broyage des matières minérales telles que le kaolin sont connus pour être très consommateurs en énergie. Des solutions visant à augmenter les rendements de broyage sont continuellement recherchées. Dans cette perspective, il est généralement utile d'employer des additifs de broyage, appelés « agents d'aide au broyage ». Ces additifs, introduits pendant l'étape de broyage de ces minéraux, sont utilisés pour faciliter le procédé de broyage, pour assister le processus de réduction des tailles des particules et pour augmenter la capacité et l'efficacité du procédé de broyage.

Egalement, lorsque les particules de kaolin sont en suspension dans l'eau, elles ont tendance à s'agglomérer de manière spontanée. On utilise alors un « agent d'aide à la dispersion » pour les disperser et maintenir une répulsion stérique entre les particules.

Le document WO 2006/081501 décrit l'utilisation d'un dispersant anionique partiellement neutralisé et d'un dispersant inorganique pour préparer des suspensions de matières minérales (kaolin, CaCO₃ et talc).

Le brevet US 4,742,105 décrit, quant à lui, des compositions binaires de défloculation pour suspensions aqueuses de kaolin consistant en un mélange binaire d'un silicate de sodium et d'un polyacrylate de sodium, potassium ou ammonium ayant un poids moléculaire situé entre 2 000 g/mol et 10 000 g/mol. De telles compositions binaires sont présentées comme ayant une viscosité maîtrisée et stable dans le temps, à température ambiante ainsi qu'à des températures élevées.

Les inventeurs se sont néanmoins rendu compte qu'un tel mélange binaire présentait un important problème de sédimentation, ce problème étant amplifié dans le temps ainsi qu'avec une augmentation des températures. Par « sédimentation », on entend un dépôt au fond des cuves d'une partie des constituants du mélange binaire qui rend difficile voire impossible leur pompage.

Le problème de la sédimentation est loin d'être un problème négligeable dans le domaine technique. Il s'avère, en effet, que les agents d'aide à la dispersion ou au broyage doivent présenter une certaine stabilité dans le temps et à des températures plus ou moins élevées car ils sont généralement utilisés sur des sites éloignés de leur lieu de production. Ainsi, ces agents doivent rester stables (c'est-à-dire ne conduire à aucune sédimentation au cours de leur stockage et de leur transport), et ce, sur une période d'au moins 15 jours et à température ambiante.

Les inventeurs ont ainsi cherché à résoudre le problème technique de la sédimentation des compositions comprenant un polymère de l'acide (méth)acrylique et un silicate.

Un premier objet de la présente invention concerne un agent d'aide à la dispersion et/ou au broyage du kaolin en suspension aqueuse consistant en un mélange ternaire :
a) d'au moins un homopolymère ou copolymère de l'acide (méth)acrylique, partiellement ou totalement neutralisé au sodium, au potassium, au lithium et/ou avec une amine et qui présente un poids moléculaire inférieur ou égal à 7 000 g/mol, tel que mesuré par CES,
b) d'au moins une solution de silicate ou métasilicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés et
c) d'au moins une base, en une quantité telle qu'elle est en excès d'au moins 2 % molaire par rapport à la quantité théorique de base nécessaire à la neutralisation totale dudit homopolymère ou copolymère de l'acide (méth)acrylique,
dans lequel le ratio pondéral homopolymère/copolymère : silicate/métasilicate (poids sec) est compris entre 20:80 et 80:20.

La demande US 6,390,301 décrit un procédé permettant de séparer les impuretés des craies mettant en œuvre un homopolymère de l'acide acrylique et un silicate de sodium, dans des ratios massiques éloignés de ceux de la présente invention. Cette demande est muette sur la neutralisation du polyacrylate.

Les inventeurs se sont rendu compte que l'ajout d'une base était nécessaire pour préparer ledit agent d'aide à la dispersion et/ou au broyage du kaolin selon l'invention sans que se produise une précipitation rapide, voire instantanée, ou une sédimentation. En effet, lorsqu'un homopolymère/copolymère de l'acide (méth)acrylique, par exemple neutralisé au sodium, est mélangé à un silicate de sodium, il y a instantanément précipitation. Cette précipitation n'a pas lieu lorsque le silicate ou métasilicate comprend, par ailleurs, une base en quantité excédentaire par rapport à une neutralisation totale dudit polymère. L'art antérieur n'indique aucunement l'importance de l'ajout d'une base en une telle quantité pour résoudre le problème technique de la précipitation et/ou de la sédimentation.

Selon la présente invention, la quantité de base à ajouter au mélange, plus précisément à ajouter à la solution de silicate ou métasilicate, est calculée par rapport au nombre total de moles de fonctions acides de l'homopolymère ou copolymère de l'acide (méth)acrylique présent dans le mélange. Cette quantité doit être telle que, d'une part, la totalité des fonctions acides dudit polymère soit neutralisée et que, d'autre part, il reste au moins 2 % molaire (par rapport au nombre total de fonctions acides portées par le polymère présent dans le mélange) de base libre dans le mélange.

Par « fonctions acides », on entend les fonctions acides carboxyliques -COOH dans le cas d'un polymère de l'acide (méth)acrylique.

La quantité de base à ajouter dans le mélange dépend du taux de neutralisation du polymère utilisé. Lorsque ce polymère est partiellement neutralisé, on ajoute une quantité de base telle que la totalité des fonctions acides dudit polymère soit neutralisée, ainsi qu'une quantité additionnelle d'au moins 2 % en moles par rapport au nombre total de fonctions acides portées par le polymère présent dans le mélange.

Lorsque ce polymère est totalement neutralisé, on ajoute une quantité de base additionnelle d'au moins 2 % en moles par rapport au nombre total de fonctions acides portées par le polymère présent dans le mélange.

Tel qu'explicité plus loin, l'homme du métier sait calculer ou évaluer la quantité théorique de base nécessaire à la neutralisation totale d'un homopolymère ou copolymère de l'acide (méth)acrylique.

Il est envisageable, dans le cadre de la présente invention, d'utiliser une base différente de celle qui a été utilisée pour neutraliser partiellement ou totalement le polymère constituant une partie du mélange.

Selon un autre mode de réalisation, l'agent d'aide à la dispersion et/ou au broyage du kaolin en suspension aqueuse selon la présente invention contient une base sélectionnée dans le groupe consistant en l'hydroxyde de sodium, l'hydroxyde de potassium, l'hydroxyde de lithium, une amine et un mélange de ces bases.

Elles peuvent être ajoutées sous forme de solutions, mais aussi sous forme de pastilles ou sous forme de poudre.

Selon un mode de réalisation de la présente invention, l'homopolymère ou copolymère de l'acide (méth)acrylique est partiellement ou totalement neutralisé avec la même base que celle utilisée pour préparer le mélange ternaire selon la présente invention.

Selon un mode de réalisation de la présente invention, le mélange ternaire contient une quantité excédentaire de base qui est l'hydroxyde de sodium (NaOH).

Selon un mode de réalisation, la quantité de base est telle qu'elle est en excès d'au moins 5 % molaire par rapport à la quantité théorique de base nécessaire à la neutralisation totale dudit homopolymère ou copolymère de l'acide (méth)acrylique, par exemple d'au moins 7 % molaire ou d'au moins 10 % molaire.

Le mélange selon l'invention contient au moins une solution de silicate ou métasilicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés.

Ces produits sont commercialement disponibles. On cite, par exemple, les produits Nasil® de la société IQE, sous forme solide et sous forme aqueuse.

Les solutions aqueuses de silicate peuvent notamment être préparées à partir des formes solides de silicate par dissolution dans des solutions aqueuses, par exemple dans de l'eau. L'extrait sec des solutions aqueuses de silicate est typiquement de 46 % en poids ± 6 %. Selon un mode de réalisation de la présente invention, ledit silicate est un silicate de sodium de formule Na₂O.2SiO₂ (formule Na₂O.nSiO₂ avec n égal à 2).

Le pH de l'agent d'aide à la dispersion et/ou au broyage du kaolin en suspension aqueuse selon l'invention est basique. Selon un mode de réalisation, l'agent d'aide à la dispersion et/ou au broyage du kaolin en suspension aqueuse selon la présente invention présente un pH supérieur ou égal à 10, 10,5 ou à 11, par exemple supérieur ou égal à 11,5.

Il est à noter que le pH des solutions de silicate utilisées dans le cadre de la présente invention varie entre 10 et 13. Ainsi, le pH de l'agent de dispersion et/ou de broyage selon l'invention est largement dépendant de la quantité de silicate engagée dans le mélange ternaire.

Selon un mode de réalisation, le ratio pondéral homopolymère/copolymère : silicate/métasilicate (poids sec) est compris entre 20:80 et 80:20.

Le polymère de l'acide (méth)acrylique se trouve généralement sous la forme d'une solution aqueuse dont l'extrait sec varie entre 20 % et 60 % en poids sec.

Ledit ratio pondéral est calculé sur la base des poids secs des deux constituants.

Selon un autre mode de réalisation, le ratio pondéral homopolymère/copolymère : silicate/métasilicate est compris entre 30:70 et 70:30 ou encore entre 40:60 et 60:40. Ce ratio est, par exemple, de 50:50, c'est-à-dire que l'agent d'aide à la dispersion et/ou au broyage selon la présente invention comporte approximativement la même quantité en poids d'homopolymères ou copolymères de l'acide (méth)acrylique, partiellement ou totalement neutralisés au sodium, au potassium, au lithium et/ou avec une amine (par exemple, 2-amino-2-méthylpropanol, triéthanolamine...), et de solution de silicate ou métasilicate choisie dans le groupe consistant en le silicate de sodium de formule Na₂O.nSiO₂ (avec n variant entre 1 et 4), un métasilicate de sodium Na₂SiO₃, le métasilicate de potassium K₂SiO₃ et/ou un silicate de potassium K₂O.nSiO₂ (avec n variant entre 1 et 4). Par « approximativement », on entend que les quantités respectives des constituants sont identiques à ± 5 % en poids sec.

Un des constituants essentiels du mélange ternaire réside dans la présence d'un homopolymère ou copolymère de l'acide (méth)acrylique.

Par « homopolymère ou copolymère de l'acide (méth)acrylique », on entend soit un polymère constitué exclusivement d'acide acrylique (homopolymère d'acide acrylique), soit un polymère constitué exclusivement d'acide méthacrylique (homopolymère d'acide méthacrylique) ou alternativement un polymère constitué d'un mélange d'acide acrylique et d'acide méthacrylique (copolymère acide acrylique-acide méthacrylique). Dans ce dernier cas, selon un aspect de l'invention, le ratio molaire entre monomères d'acide acrylique et monomères d'acide méthacrylique peut varier entre 1:100 et 100:1, par exemple entre 1:1 et 100:1 ou entre 1:1 et 50:1.

Par ailleurs, le copolymère selon l'invention peut également comprendre, en outre, un ou plusieurs autre(s) monomère(s) éthylèniquement insaturé(s) choisi(s) dans le groupe consistant en l'acide itaconique, crotonique, fumarique, l'acide maléique, l'anhydride maléique, isocrotonique, aconitique, mésaconique, sinapique, undécylénique, angélique, l'acide 2-acrylamido-2-méthylpropane sulfonique (AMPS), le méthallylsulfonate de sodium, l'acrylamide et le méthacrylamide.

Dans ce dernier cas, selon un aspect de l'invention, le ratio molaire entre monomères d'acide (méth)acrylique et autre(s) monomère(s) insaturé(s) peut varier entre 1:1 et 100:1, par exemple entre 1:1 et 75:1 ou entre 1:1 et 50:1.

Ledit homopolymère ou copolymère de l'acide (méth)acrylique peut être obtenu par tous procédés de polymérisation radicalaire, par exemple en solution, en émulsion directe ou inverse, en suspension ou précipitation dans des solvants appropriés, en présence de systèmes catalytiques et d'agents de transfert. Il peut s'agir d'un procédé de polymérisation radicalaire contrôlée, par exemple par des nitroxydes (NMP) ou des cobaloxymes, ou d'un procédé de polymérisation par transfert d'atomes radicalaires (ATRP). On cite également les procédés de polymérisation radicalaire contrôlée par des dérivés soufrés choisis parmi les carbamates, les dithioesters, les trithiocarbonates (RAFT) et les xanthates.

On peut, par exemple, utiliser du peroxyde d'hydrogène ou du persulfate qui joue le rôle d'initiateur, ainsi que, par exemple, du sulfate de cuivre qui joue le rôle de catalyseur et d'agent de transfert de chaîne.

Alternativement, on utilise, par exemple, l'acide thiolactique ou un autre mercaptan en tant qu'agent de transfert de chaîne supplémentaire ou des alcools secondaires.

D'autres procédés encore ont recours à l'hypophosphite de sodium, de formule chimique NaPO₂H₂, en tant qu'agent de transfert de chaîne et d'oxydo-réduction, en présence d'eau oxygénée ou de générateur de radicaux.

A cet égard, il est notamment fait références aux documents suivants qui décrivent divers procédés de polymérisation radicalaire de l'acide acrylique : WO 02/070571, WO 2005/095466, WO 2006/024706, WO 2014/049252.

Les polymères de l'acide (méth)acrylique sont généralement caractérisés par deux indices/grandeurs/valeurs :
- l'indice de polymolécularité IP (également appelé de manière équivalente polydispersité PD) et
- la masse moléculaire Mw (également appelée de manière équivalente masse molaire ou poids moléculaire), exprimée en g/mol.

L'indice de polymolécularité correspond à la distribution des masses molaires des différentes macromolécules au sein du polymère d'acide (méth)acrylique. Si toutes les macromolécules présentent un même degré de polymérisation (donc une même masse moléculaire), cet indice est proche de 1. Si par contre, les macromolécules présentent des degrés de polymérisation différents (donc des masses moléculaires différentes), l'indice IP est supérieur à 1. Plus l'indice IP du polymère est proche de 1, plus celui-ci est efficace dans ses diverses applications.

Selon l'invention, ledit homopolymère ou copolymère de l'acide (méth)acrylique présente un poids moléculaire inférieur ou égal à 7 000 g/mol, tel que mesuré par Chromatographie d'Exclusion Stérique (CES) ou en anglais « Gel Permeation Chromatography » (GPC).

Une telle technique met classiquement en œuvre un appareil de chromatographie liquide de marque WATERS™ doté d'un détecteur. Ce dernier est un détecteur de concentration réfractométrique de marque WATERS™.

Cet appareillage de chromatographie liquide est doté d'une colonne d'exclusion stérique convenablement choisie par l'homme du métier afin de séparer les différents poids moléculaires des polymères étudiés.

La phase liquide d'élution est une phase aqueuse ajustée à pH 9 par de la soude 1N contenant 0,05M de NaHCO₃, 0,1M de NaNO₃, 0,02M de triétanolamine et 0,03 % de NaN₃.

De manière détaillée, selon une première étape, on dilue à 0,9 % sec la solution de polymérisation dans le solvant de solubilisation de la CES, qui correspond à la phase liquide d'élution de la CES à laquelle est ajouté 0,04 % de diméthylformamide qui joue le rôle de marqueur de débit ou étalon interne. Puis, on filtre à 0,2 µm. 100 µL sont ensuite injectés dans l'appareil de chromatographie (éluant : une phase aqueuse ajustée à pH 9 par de la soude 1N contenant 0,05 M de NaHCO₃, 0,1M de NaNO₃, 0,02 M de triétanolamine et 0,03 % de NaN₃).

L'appareil de chromatographie liquide contient une pompe isocratique (WATERS™ 515) dont le débit est réglé à 0,8 mL/min. L'appareil de chromatographie comprend également un four qui lui-même comprend en série le système de colonnes suivant : une précolonne de type GUARD COLUMN ULTRAHYDROGEL WATERS™ de 6 cm de long et 40 mm de diamètre intérieur et une colonne linéaire de type ULTRAHYDROGEL WATERS™ de 30 cm de long et 7,8 mm de diamètre intérieur. Le système de détection, quant à lui, se compose d'un détecteur réfractométrique de type RI WATERS™ 410. Le four est porté à la température de 60°C et le réfractomètre est porté à la température de 45°C.

L'appareil de chromatographie est étalonné par des étalons de polyacrylates de sodium en poudre de différentes masses moléculaires certifiées par le fournisseur : POLYMER STANDARD SERVICE ou AMERICAN POLYMER STANDARDS CORPORATION. Selon un mode de réalisation, ledit homopolymère ou copolymère de l'acide (méth)acrylique présente un poids moléculaire inférieur ou égal à 6 000 g/mol, tel que mesuré par CES, par exemple inférieur ou égal à 5 000 g/mol.

Selon un mode de réalisation, ledit homopolymère ou copolymère de l'acide (méth)acrylique présente un poids moléculaire inférieur ou égal à 3 000 g/mol, tel que mesuré par CES, par exemple de l'ordre de 2 500 g/mol ou de 2 000 g/mol.

Selon un mode de réalisation, ledit homopolymère ou copolymère de l'acide (méth)acrylique présente un poids moléculaire allant de 1 100 g/mol à 7 000 g/mol, avantageusement de 1 100 g/mol à 6 000 g/mol, plus avantageusement de 1 100 g/mol à 5 000 g/mol, encore plus avantageusement de 1 100 g/mol à 3 000 g/mol.

Selon un mode de réalisation, ledit homopolymère ou copolymère de l'acide (méth)acrylique présente un indice IP compris entre 1,5 et 3.

L'indice de polydispersité IP du polymère de l'acide (méth)acrylique est calculé de la manière suivante : il s'agit du rapport de la masse moléculaire moyenne en masse Mw sur la masse moléculaire en nombre Mn.

Selon un mode de réalisation préféré de la présente invention, l'agent consiste en un mélange ternaire de :
a) 20 % à 80 % en poids dudit au moins un homopolymère ou copolymère de l'acide (méth)acrylique, partiellement ou totalement neutralisé au sodium, au potassium, au lithium et/ou avec une amine et qui présente un poids moléculaire inférieur ou égal à 7 000 g/mol, tel que mesuré par CES,
b) 20 % à 80 % en poids de ladite au moins une solution de silicate ou métasilicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés et
c) 1 % à 10 % en poids de ladite au moins une base,
dans lequel le ration pondéral homopolymère/copolymère : silicate/métasilicate (poids sec) est compris entre 20:80 et 80:20.

Selon un mode de réalisation, l'agent d'aide à la dispersion et/ou au broyage du kaolin en suspension aqueuse consiste en un mélange ternaire de :
a) 40 % à 80 % en poids dudit au moins un homopolymère ou copolymère de l'acide (méth)acrylique, partiellement ou totalement neutralisé au sodium, au potassium, au lithium et/ou avec une amine et qui présente un poids moléculaire inférieur ou égal à 7 000 g/mol, tel que mesuré par CES,
b) 20 % à 60 % en poids de ladite au moins une solution de silicate ou métasilicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés et
c) 1 % à 10 % en poids de ladite au moins une base,
dans lequel le ration pondéral homopolymère/copolymère : silicate/métasilicate (poids sec) est compris entre 20:80 et 80:20.

Selon un mode de réalisation, l'agent d'aide à la dispersion et/ou au broyage du kaolin en suspension aqueuse consiste en un mélange ternaire de :
a) 45 % à 70 % en poids dudit au moins un homopolymère ou copolymère de l'acide (méth)acrylique, partiellement ou totalement neutralisé au sodium, au potassium, au lithium et/ou avec une amine et qui présente un poids moléculaire inférieur ou égal à 7 000 g/mol, tel que mesuré par CES,
b) 30 % à 65 % en poids de ladite au moins une solution de silicate ou métasilicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés et
c) 1 % à 10 % en poids de ladite au moins une base,
dans lequel le ration pondéral homopolymère/copolymère : silicate/métasilicate (poids sec) est compris entre 20:80 et 80:20.

Selon un mode de réalisation, l'agent d'aide à la dispersion et/ou au broyage du kaolin en suspension aqueuse consiste en un mélange ternaire :
a) d'un homopolymère de l'acide acrylique totalement neutralisé au sodium, au potassium, au lithium et/ou avec une amine et qui présente un poids moléculaire inférieur ou égal à 7 000 g/mol, tel que mesuré par CES,
b) d'une solution de silicate de sodium de formule Na₂O.nSiO₂ (avec n variant entre 1 et 4) et
c) d'une base,
dans lequel le ratio pondéral homopolymère : silicate/métasilicate est compris entre 2:8 et 8:2, avantageusement entre 3:7 et 7:3.

Selon un mode de réalisation encore, l'agent d'aide à la dispersion et/ou au broyage du kaolin en suspension aqueuse consiste en un mélange ternaire :
a) d'un homopolymère de l'acide acrylique totalement neutralisé au sodium,
b) d'une solution de silicate de sodium de formule Na₂O.2SiO₂ et
c) de soude, en une quantité telle qu'elle est en excès d'au moins 2 % molaire par rapport à la quantité théorique de base nécessaire à la neutralisation totale dudit homopolymère ou copolymère de l'acide (méth)acrylique,
dans lequel le ratio pondéral homopolymère : silicate est compris entre 2:8 et 8:2, avantageusement entre 3:7 et 7:3.

Selon un mode de réalisation de la présente invention, le mélange ternaire comprend un homopolymère de l'acide acrylique totalement neutralisé au sodium.

L'homme du métier sait calculer la quantité théorique de base nécessaire à la neutralisation totale d'un homopolymère de l'acide acrylique de poids moléculaire connu, compte tenu du poids moléculaire de l'acide acrylique (72 g/mol).

Par exemple, si on utilise un homopolymère de l'acide acrylique qui présente un poids moléculaire de 7 000 g/mol, on déduit le nombre de fonctions acides par calcul, soit environ 97,2 moles de fonctions acides par mole de polymère. Ainsi, 97,2 moles de base sont nécessaires pour neutraliser complètement une mole de polymère.

Dans ce cas de figure, on ajoute à la solution de silicate ou métasilicate au moins un excès de 2 % molaire (par rapport aux 97,2 moles de base nécessaires à la neutralisation totale du polymère), soit 1,9 moles de base.

Si un excès de 5 % molaire de base par rapport à la quantité théorique de base nécessaire à la neutralisation totale de l'homopolymère doit être ajouté, on ajoute alors 4,86 moles de base en excès.

On déduit la quantité en poids de base à ajouter à la solution de silicate ou métasilicate en tenant compte du poids moléculaire du choix de la base utilisée.

Alternativement, l'homme du métier réalise une mesure de l'indice d'acide du polymère par dosage acido-basique. L'indice d'acide correspond à la masse de base (exprimée en mg de KOH) nécessaire pour neutraliser l'acidité d'un gramme de polymère. Par calcul, il est ensuite possible de déterminer la quantité théorique de base nécessaire à la neutralisation totale du polymère et ainsi de calculer l'excès de base à ajouter pour préparer l'agent selon l'invention.

Lorsque le polymère est partiellement ou totalement neutralisé, l'homme du métier peut utiliser les résines échangeuses d'ion qui lui permettent de revenir à la forme acide du polymère. Alternativement, il réalise un titrage en retour à l'aide d'une base forte, après ajout d'un excès d'un acide fort, par exemple l'acide sulfurique.

Un autre objet de la présente invention concerne un procédé de préparation d'un agent d'aide à la dispersion et/ou au broyage de matériaux minéraux en suspension aqueuse, comprenant les étapes suivantes :
a) on ajoute une base à une solution de silicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés et
b) on introduit dans le mélange précédent un homopolymère ou un copolymère de l'acide (méth)acrylique, partiellement ou totalement neutralisé au sodium, au potassium, au lithium et/ou avec une amine,
ladite base étant ajoutée en une quantité telle à être en excès d'au moins 2 % molaire par rapport au nombre total de moles d'homopolymères ou copolymères de l'acide (méth)acrylique.

Selon un mode de réalisation, le procédé de préparation d'un agent d'aide à la dispersion et/ou au broyage du kaolin en suspension aqueuse est réalisé sous agitation à une température comprise entre 5°C et 50°C.

Selon un autre mode de réalisation, le procédé de préparation d'un agent d'aide à la dispersion et/ou au broyage du kaolin en suspension aqueuse est réalisé à une température comprise entre 10°C et 40°C, par exemple entre 15°C et 35°C.

Un autre objet encore de la présente invention réside dans un procédé de dispersion et/ou de broyage du kaolin, comprenant une étape de dispersion et/ou de broyage du kaolin en suspension aqueuse au moyen dudit agent d'aide à la dispersion et/ou au broyage.

Cet agent est présent en une quantité efficace afin d'obtenir une efficacité accrue de dispersion et/ou de broyage, tel que déterminé par l'homme du métier, par exemple au moyen d'une courbe de défloculation.

Selon un mode de réalisation, ledit agent est présent dans une proportion comprise entre 0,01 % et 10 % en poids sec par rapport au poids sec du kaolin, par exemple entre 0,1 % et 5 %.

Un autre objet de la présente invention concerne l'utilisation d'un mélange ternaire tel que décrit plus haut pour disperser des particules de kaolin en solution.

Un autre objet de la présente invention concerne l'utilisation d'un mélange ternaire tel que décrit plus haut pour préparer une suspension de kaolin.

Un autre objet de la présente invention concerne l'utilisation d'un mélange ternaire tel que décrit plus haut comme agent d'aide au broyage et/ou d'aide au cobroyage du kaolin.

Les exemples qui suivent permettent de mieux appréhender la présente invention, sans en limiter la portée.

### EXEMPLES

Dans l'ensemble des exemples qui suivent, on utilise en tant que polymère de l'acide (méth)acrylique un polymère présentant les caractéristiques suivantes et obtenu par le procédé décrit ci-après.

### Caractéristiques du polymère d'acide acrylique

Poids moléculaire Mw (déterminé par CES tel qu'indiqué ci-dessus) : 2 900 g/mol
Poids moléculaire Mn (déterminé par CES tel qu'indiqué ci-dessus) : 1 320 g/mol Indice IP : 2,2
ES (Extrait Sec) : 42 %
pH = 8 (polymère totalement neutralisé NaOH)

### Exemple 1

Cet exemple illustre la préparation d'un agent selon le procédé décrit dans le brevet US 4,742,105 (essai 1-1, art antérieur), ainsi que la préparation d'un agent selon le procédé de la présente invention (essai 1-2).

### Essai 1-1

354,9 g de polymère de l'acide acrylique (Mw = 2 900 g/mol, Mn = 1 320 g/mol, ES = 42 % en poids), totalement neutralisés à la soude, et 98,4 g de silicate de sodium de formule Na₂O.2SiO₂ (Nasil® 0112 ; ES : 50,5 %) sont mélangés ensemble avec addition de 20 g d'eau.

### Essai 1-2

12,3 g de NaOH (20 %) sont ajoutés à 98,4 g de silicate de sodium de formule Na₂O.2SiO₂ (Nasil® 0112 ; ES : 50,5 %).

354,9 g de polymère de l'acide acrylique (Mw = 2 900 g/mol, Mn = 1 320 g/mol, ES = 42 % en poids), totalement neutralisés à la soude, sont ensuite ajoutés au mélange précédent avec addition de 20 g d'eau.

Tous les résultats ont été regroupés dans le Tableau 1 ci-dessous.

**Tableau 1**

| | **Essai 1-1** | | **Essai 1-2** | |
|---|---|---|---|---|
| Nasil® 0112 | 98,4 g | 21,7 % | 98,4 g | 21,1 % |
| NaOH | 0 g | 0 % | 12,3 g | 2,6 % |
| Polymère | 354,9 g | 78,3 % | 354,9 g | 76,3 % |
| Eau | 20 g | - | 20 g | - |
| Observations | Précipitation instantanée | | - | |

On constate un problème de précipitation immédiat lorsque l'on suit le procédé décrit dans le brevet US 4,742,105.

Aucune précipitation immédiate n'est constatée dans le cas de l'essai 1-2.

### Exemple 2

Cet exemple illustre l'utilisation de différentes quantités d'hydroxyde de sodium NaOH.

### Essai 2-1

26,4 g de soude NaOH (50 %) sont ajoutés à une solution de 274 g de silicate de sodium de formule Na₂O.2SiO₂ (Nasil® 0112 ; ES : 50,5 %).

328 g de polymère de l'acide acrylique (Mw = 2 900 g/mol, Mn = 1 320 g/mol, ES = 42 % en poids), totalement neutralisés à la soude, sont ensuite ajoutés au mélange précédent avec addition de 57,1 g d'eau.

Cet essai correspond à un excès de NaOH de 7,2 % molaire.

### Essai 2-2

19,8 g de soude NaOH (50 %) sont ajoutés à une solution de 274 g de silicate de sodium de formule Na₂O.2SiO₂ (Nasil® 0112 ; ES : 50,5 %).

328 g de polymère de l'acide acrylique (Mw = 2 900 g/mol, Mn = 1 320 g/mol, ES = 42 % en poids), totalement neutralisés à la soude, sont ensuite ajoutés au mélange précédent avec addition de 57,1 g d'eau.

Cet essai correspond à un excès de NaOH de 5,4 % molaire.

### Essai 2-3

13,2 g de soude NaOH (50 %) sont ajoutés à une solution de 274 g de silicate de sodium de formule Na₂O.2SiO₂ (Nasil® 0112 ; ES : 50,5 %).

328 g de polymère de l'acide acrylique (Mw = 2 900 g/mol, Mn = 1 320 g/mol, ES = 42 % en poids), totalement neutralisés à la soude, sont ensuite ajoutés au mélange précédent avec addition de 57,1 g d'eau.

Cet essai correspond à un excès de NaOH de 3,6 % molaire.

Tous les résultats ont été regroupés dans le Tableau 2 ci-dessous.

**Tableau 2**

| | **Essai 2-1** | | **Essai 2-2** | | **Essai 2-3** | |
|---|---|---|---|---|---|---|
| Polymère | 328 g | 47,6 % | 328 g | 48,2 % | 328 g | 48,7 % |
| NaOH | 26 g | **4,6 %** | 19,8 g | **3,5 %** | 13,2 g | **2,3 %** |
| Silicate | 274 g | 47,8 % | 274 g | 48,3 % | 274 g | 49,0 % |
| eau | 57,1 g | - | 57,1 g | - | 57,1 g | - |
| ES (%) | 42,3 % | | 42,2 % | | 42,1 % | |
| Ratio P/S | 50/50 | | 50/50 | | 50/50 | |
| Limite sédimentation température ambiante | > 40 jours | | 35 jours | | 15 jours | |

| | | | | | | |
|---|---|---|---|---|---|---|
| *Ratio P*/*S* = *ratio pondéral polymère*/*silicate (poids secs)* | | | | | | |

### Exemple 3

Cet exemple illustre l'utilisation de différents ratios de polymère/silicate.

### Essai 3-1

26,4 g de soude NaOH (50 %) sont ajoutés à une solution de 137,2 g de silicate de sodium de formule Na₂O.2SiO₂ (Nasil® 0112 ; ES : 50,5 %).

492,7 g de polymère de l'acide acrylique (Mw = 2 900 g/mol, Mn = 1 320 g/mol, ES = 42 % en poids), totalement neutralisés à la soude, sont ensuite ajoutés au mélange précédent avec addition de 30,1 g d'eau.

### Essai 3-2

19,8 g de soude NaOH (50 %) sont ajoutés à une solution de 274 g de silicate de sodium de formule Na₂O.2SiO₂ (Nasil® 0112 ; ES : 50,5 %).

328 g de polymère de l'acide acrylique (Mw = 2 900 g/mol, Mn = 1 320 g/mol, ES = 42 % en poids), totalement neutralisés à la soude, sont ensuite ajoutés au mélange précédent avec addition de 57,1 g d'eau.

### Essai 3-3

26,4 g de soude NaOH (50 %) sont ajoutés à une solution de 411,7 g de silicate de sodium de formule Na₂O.2SiO₂ (Nasil® 0112 ; ES : 50,5 %).

164,2 g de polymère de l'acide acrylique (Mw = 2 900 g/mol, Mn = 1 320 g/mol, ES = 42 % en poids), totalement neutralisés à la soude, sont ensuite ajoutés au mélange précédent avec addition de 84,1 g d'eau.

Tous les résultats ont été regroupés dans le Tableau 3 ci-dessous.

**Tableau 3**

| | **Essai 3-1** | **Essai 3-2** | **Essai 3-3** |
|---|---|---|---|
| Polymère | 492,7 g | 328 g | 164,2 g |
| NaOH | 26,4 g | 19,8 g | 26,4 g |
| Nasil® 0112 | 137,2 g | 274 g | 411,7 g |
| eau | 30,1 g | 57,1 g | 84,1 g |
| ES (%) | 42,3 % | 42,2 % | 42,3 % |
| Ratio P/S | 75/25 | 50/50 | 25/75 |
| Limite sédimentation température ambiante | 25 jours | 34 jours | > 40 jours |

| | | | |
|---|---|---|---|
| *Ratio P*/*S = ratio pondéral polymère*/*silicate (poids secs)* | | | |

### Exemple 4

Cet exemple illustre l'utilisation de l'hydroxyde de potassium en tant que base du mélange ternaire.

### Essai 4-1

88,2 g de KOH (50 %) sont ajoutés à une solution de 623,7 g de silicate de sodium de formule Na₂O.2SiO₂ (Nasil® 0112 ; ES : 50,5 %).

746,5 g de polymère de l'acide acrylique (Mw = 2 900 g/mol, Mn = 1 320 g/mol, ES = 42 % en poids), totalement neutralisés à la soude, sont ensuite ajoutés au mélange précédent avec addition de 129,8 g d'eau.

Tous les résultats ont été regroupés dans le Tableau 4 ci-dessous.

**Tableau 4**

| | **Essai 4-1** |
|---|---|
| Nasil® 0112 | 623,7 g |
| KOH | 88,2 g |
| Polymère | 746,5 g |
| Eau | 129,8 g |
| ES (%) | 41,6 % |
| Ratio P/S | 50/50 |
| Limite sédimentation température ambiante | > 40 jours |

| | |
|---|---|
| *Ratio P*/*S = ratio pondéral polymère*/*silicate (poids secs)* | |

### Exemple 5

Cet exemple illustre l'utilisation d'un polymère de l'acide acrylique de poids moléculaire égal à 4 500 g/mol pour préparer un agent d'aide à la dispersion et/ou au broyage selon l'invention. Il illustre également l'utilisation d'un polymère de l'acide acrylique de poids moléculaire égal à 7 300 g/mol pour préparer un agent d'aide au broyage.

### Essai 5-1

44,1 g de KOH (50 %) sont ajoutés à une solution de 213,9 g de silicate de sodium de formule Na₂O.2SiO₂ (Nasil® 0112 ; ES : 50,5 %).

687,5 g de polymère de l'acide acrylique (Mw = 4 500 g/mol, Mn = 1850 g/mol, ES = 42 %), totalement neutralisés à la soude, sont alors ajoutés au mélange précédent avec addition de 54,5 g d'eau.

### Essai 5-2

43,1 g de NaOH (50 %) sont ajoutés à 406,2 g de silicate de sodium de formule Na₂O.2SiO₂ (Nasil® 0112 ; ES : 50,5 %).

540,5 g de polymère de l'acide acrylique (Mw = 7 300 g/mol, Mn = 2 700 g/mol, ES = 38 %), totalement neutralisés à la soude, sont alors ajoutés au mélange précédent avec addition de 40,3 g d'eau.

Tous les résultats ont été regroupés dans le Tableau 5 ci-dessous.

**Tableau 5**

| | **Essai 5-1** | **Essai 5-2** |
|---|---|---|
| Nasil® 0112 | 213,9 g | 406,2 g |
| KOH/NaOH | 44,1 g | 43,1 g |
| Polymère | 687,5 g | 540,5 g |
| Eau | 54,5 g | 40,3 g |
| ES (%) | 42,2 % | 42,2 % |
| Ratio P/S | 73/27 | 53/47 |
| Limite sédimentation température ambiante | > 40 jours | < 2 jours |

| | | |
|---|---|---|
| *Ratio P*/*S = ratio pondéral polymère*/*silicate (poids secs)* | | |

### Exemple 6

Cet essai illustre la stabilité d'un mélange ternaire selon l'invention sous différentes conditions : après une semaine à une température de 50°C, ainsi qu'après un ou trois cycles de gel/dégel.

Plus précisément, le cycle gel/dégel consiste en un stockage d'une nuit au congélateur à une température de -18°C.

Tous les résultats sont donnés dans le Tableau 6 ci-dessous.

On mesure la viscosité (exprimée en mPa.s) de chaque agent à 20°C avec un viscosimètre de type Brookfield DVIII. Les valeurs des viscosités indiquées sont mesurées après agitation, à une vitesse de 100 t/min.

Les valeurs des viscosités dans ces conditions extrêmes sont tout particulièrement pertinentes en vue d'évaluer les caractéristiques de l'agent au regard de son stockage et utilisation dans des procédés industriels.

### Essai 6

60 g de NaOH (50 %) sont ajoutés à 405g de silicate de sodium de formule Na₂O.2SiO₂ (Nasil® 0112 ; ES : 50,5 %).

950 g de polymère de l'acide acrylique (Mw = 2 900 g/mol, Mn = 1 320 g/mol, ES = 42 % en poids), totalement neutralisés à la soude, sont alors ajoutés au mélange précédent avec addition de 87 g d'eau.

**Tableau 6**

| | | **Essai 6** |
|---|---|---|
| Stabilité à température ambiante | | |
| Viscosité 100 t/min | (mPa.s) | 118 |

| Stabilité après une semaine à 50°C | | |
|---|---|---|
| Viscosité 100 t/min | (mPa.s) | 114 |

| Stabilité après un cycle gel/dégel | | |
|---|---|---|
| Viscosité 100 t/min | (mPa.s) | 104 |

| Stabilité après trois cycles gel/dégel | | |
|---|---|---|
| Viscosité 100 t/min | (mPa.s) | 98 |

### Exemple 7

Cet essai illustre la mise en œuvre de différents mélanges ternaires comme agents d'aide à la dispersion de particules de kaolin. On prépare deux suspensions de kaolin, à partir de particules de kaolin Capim® DG (Imerys) à 70 % de concentration et contenant chacune une quantité variable de l'agent selon l'essai 7-1 ou selon l'essai 7-2.

### Essai 7-1

50 g de NaOH (50 %) sont ajoutés à 497 g de silicate de sodium de formule Na₂O.2SiO₂ (Nasil® 0112 ; ES : 50,5 %).

630 g de polymère de l'acide acrylique (Mw = 2 900 g/mol, Mn = 1 320 g/mol, ES = 42 % en poids), totalement neutralisés à la soude, sont alors ajoutés au mélange précédent avec addition de 110 g d'eau.

### Essai 7-2

60 g de NaOH (50 %) sont ajoutés à 405 g de silicate de sodium de formule Na₂O.2SiO₂ (Nasil® 0112 ; ES : 50,5 %).

950 g de polymère de l'acide acrylique (Mw = 2 900 g/mol, Mn = 1 320 g/mol, ES = 42 % en poids), totalement neutralisés à la soude, sont alors ajoutés au mélange précédent avec addition de 87 g d'eau.

Les deux mélanges des essais 7-1 et 7-2 sont utilisés dans un procédé de dispersion du kaolin, comprenant une étape de dispersion du kaolin en suspension aqueuse. On mesure la viscosité de la suspension/dispersion du kaolin selon le protocole donné à l'exemple 6. On détermine la quantité efficace d'agents au moyen d'une courbe de défloculation selon le protocole qui suit.

On prépare une solution aqueuse en pesant une quantité déterminée d'eau et d'agents selon l'essai 7-1 ou selon l'essai 7-2 pour obtenir une suspension du kaolin à 70 % d'extrait sec contenant 0,07 % sec/sec dudit agent et on ajuste le pH de cette solution à 8. On introduit sous agitation une quantité déterminée de poudre de kaolin dans cette solution aqueuse. On maintient l'agitation pendant 15 minutes.

On mesure la viscosité Brookfield à 100 t/min.

On réitère la mesure avec des doses croissantes d'agents, à savoir 0,1 %, 0,13 %, 0,18 % et 0,28 %.

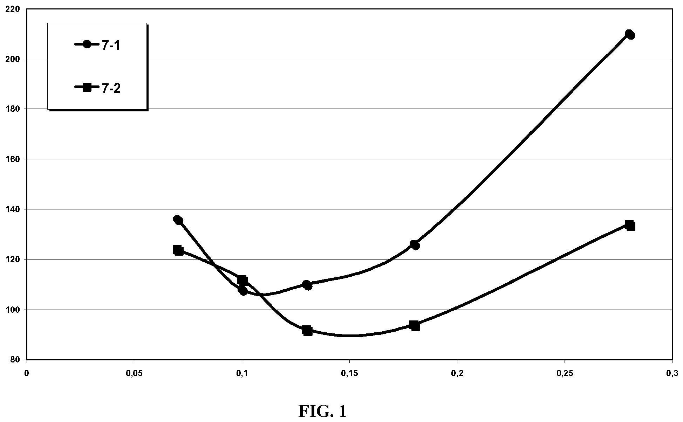

Les résultats sont présentés à la Figure 1.

## Revendications

1. Agent d'aide à la dispersion et/ou au broyage du kaolin en suspension aqueuse consistant en un mélange ternaire :
a) d'au moins un homopolymère ou copolymère de l'acide (méth)acrylique, partiellement ou totalement neutralisé au sodium, au potassium, au lithium et/ou avec une amine et qui présente un poids moléculaire inférieur ou égal à 7 000 g/mol, tel que mesuré par CES,
b) d'au moins une solution de silicate ou métasilicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés et
c) d'au moins une base, en une quantité telle qu'elle est en excès d'au moins 2 % molaire par rapport à la quantité théorique de base nécessaire à la neutralisation totale dudit homopolymère ou copolymère de l'acide (méth)acrylique,
dans lequel le ratio pondéral homopolymère/copolymère : silicate/métasilicate (poids sec) est compris entre 20:80 et 80:20.

2. Agent selon la revendication 1, selon lequel ledit homopolymère ou copolymère de l'acide (méth)acrylique présente un poids moléculaire inférieur ou égal à 6 000 g/mol, tel que mesuré par CES.

3. Agent selon l'une quelconque des revendications précédentes, selon lequel ledit homopolymère ou copolymère de l'acide (méth)acrylique présente un indice IP compris entre 1,5 et 3.

4. Agent selon l'une quelconque des revendications précédentes, selon lequel la quantité de base est telle qu'elle est en excès d'au moins 5 % molaire par rapport à la quantité théorique de base nécessaire à la neutralisation totale dudit homopolymère ou copolymère de l'acide (méth)acrylique.

5. Agent selon l'une quelconque des revendications précédentes, selon lequel ledit silicate est un silicate de sodium de formule Na₂O.2SiO₂.

6. Agent selon l'une quelconque des revendications précédentes, consistant en un mélange ternaire de :
a) 20 % à 80 % en poids dudit au moins un homopolymère ou copolymère de l'acide (méth)acrylique, partiellement ou totalement neutralisé au sodium, au potassium, au lithium et/ou avec une amine et qui présente un poids moléculaire inférieur ou égal à 7 000 g/mol, tel que mesuré par CES,
b) 20 % à 80 % en poids de ladite au moins une solution de silicate ou métasilicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés et
c) 1 % à 10 % en poids de ladite au moins une base,
dans lequel le ratio pondéral homopolymère/copolymère : silicate/métasilicate (poids sec) est compris entre 20:80 et 80:20.

7. Procédé de préparation d'un agent d'aide à la dispersion et/ou au broyage de matériaux minéraux en suspension aqueuse selon l'une quelconque des revendications 1 à 6, comprenant les étapes suivantes :
a) on ajoute une base à une solution de silicate choisie dans le groupe consistant en le silicate de sodium de formule Na₂O.nSiO₂ (avec n variant entre 1 et 4), le métasilicate de sodium Na₂SiO₃, le silicate de potassium K₂O.nSiO₂ (avec n variant entre 1 et 4), le métasilicate de potassium K₂SiO₃ et un mélange de ces composés et
b) on introduit dans le mélange précédent un homopolymère ou un copolymère de l'acide (méth)acrylique, partiellement ou totalement neutralisé au sodium, au potassium, au lithium et/ou avec une amine et qui présente un poids moléculaire inférieur ou égal à 7 000 g/mol, tel que mesuré par CES,
ladite base étant ajoutée en une quantité telle à être en excès d'au moins 2 % molaire par rapport au nombre total de moles d'homopolymères ou copolymères de l'acide (méth)acrylique.

8. Procédé selon la revendication 7, **caractérisé en ce qu'**il est réalisé sous agitation à une température comprise entre 5°C et 50°C.

## Patentansprüche

1. Hilfsmittel zur Dispersion und/oder Zerkleinerung von Kaolin in wässriger Suspension bestehend aus der folgenden ternären Mischung:
a) mindestens ein (Meth)acrylsäure-Homopolymer oder Copolymer, das teilweise oder vollständig mit Natrium, Kalium, Lithium und/oder einem Amin neutralisiert ist und ein Molekulargewicht von weniger als oder gleich 7.000 g/mol gemäß SEC-Messung aufweist,
b) mindestens eine Silikat- oder Metasilikat-Lösung, ausgewählt aus der Gruppe bestehend aus Natriumsilikat mit der Formel Na₂O.nSiO₂ (wobei n zwischen 1 und 4 variiert), Natriummetasilikat Na₂SiO₃, Kaliumsilikat K₂O.nSiO₂ (wobei n zwischen 1 und 4 variiert), Kaliummetasilikat K₂SiO₃ und einer Mischung dieser Verbindungen, und
c) mindestens eine Lauge, deren Menge so festgelegt wird, dass sie einen Überschuss von mindestens 2 Mol-% gegenüber der theoretischen Laugenmenge bildet, die für die vollständige Neutralisierung dieses (Meth)acrylsäure-Homopolymers oder Copolymers notwendig ist,
wobei das Gewichtsverhältnis Homopolymer/Copolymer: Silikat/Metasilikat (Trockengewicht) zwischen 20:80 und 80:20 liegt.

2. Mittel nach Anspruch 1, wobei dieses (Meth)acrylsäure-Homopolymer oder Copolymer ein Molekulargewicht von weniger oder gleich 6.000 g/mol gemäß SEC-Messung aufweist.

3. Mittel nach einem beliebigen der vorstehenden Ansprüche, wobei dieses (Meth)acrylsäure-Homopolymer oder Copolymer einen Pi-Index zwischen 1,5 und 3 aufweist.

4. Mittel nach einem beliebigen der vorstehenden Ansprüche, wobei die Laugenmenge so festgelegt wird, dass sie einen Überschuss von mindestens 5 Mol-% gegenüber der theoretischen Laugenmenge bildet, die für die vollständige Neutralisierung dieses (Meth)acrylsäure-Homopolymers oder Copolymers notwendig ist.

5. Mittel nach einem beliebigen der vorstehenden Ansprüche, wobei dieses Silikat ein Natriumsilikat mit der Formel Na₂O.2SiO₂ ist.

6. Mittel nach einem beliebigen der vorstehenden Ansprüche, das aus einer ternären Mischung wie folgt besteht:
a) 20 Gew.-% bis 80 Gew.-% dieses mindestens einen (Meth)acrylsäure-Homopolymers oder Copolymers, das teilweise oder vollständig mit Natrium, Kalium, Lithium und/oder einem Amin neutralisiert ist und ein Molekulargewicht von weniger als oder gleich 7.000 g/mol gemäß SEC-Messung aufweist,
b) 20 Gew.-% bis 80 Gew.-% mindestens einer Silikat- oder Metasilikat-Lösung, ausgewählt aus der Gruppe bestehend aus Natriumsilikat mit der Formel Na₂O.nSiO₂ (wobei n zwischen 1 und 4 variiert), Natriummetasilikat Na₂SiO₃, Kaliumsilikat K₂O.nSiO₂ (wobei n zwischen 1 und 4 variiert), Kaliummetasilikat K₂SiO₃ und einer Mischung dieser Verbindungen, und
c) 1 Gew.-% bis 10 Gew.-% dieser mindestens einen Lauge,
bei der das Gewichtsverhältnis Homopolymer/Copolymer: Silikat/Metasilikat (Trockengewicht) zwischen 20:80 und 80:20 liegt.

7. Verfahren zur Herstellung eines Hilfsmittels zur Dispersion und/oder Zerkleinerung von Mineralstoffen in wässriger Suspension nach einem beliebigen der Ansprüche 1 bis 6, das folgende Schritte umfasst:
a) Hinzufügen einer Lauge zu einer Silikat-Lösung, ausgewählt aus der Gruppe bestehend aus Natriumsilikat mit der Formel Na₂O.nSiO₂ (wobei n zwischen 1 und 4 variiert), Natriummetasilikat Na₂SiO₃, Kaliumsilikat K₂O.nSiO₂ (wobei n zwischen 1 und 4 variiert), Kaliummetasilikat K₂SiO₃ und einer Mischung dieser Verbindungen, und
b) Beimengen eines (Meth)acrylsäure-Homopolymers oder Copolymers, das teilweise oder vollständig mit Natrium, Kalium, Lithium und/oder einem Amin neutralisiert ist und ein Molekulargewicht von weniger als oder gleich 7.000 g/mol gemäß SEC-Messung aufweist, zur vorherigen Mischung,
wobei diese Lauge in einer solchen Menge hinzugefügt wird, dass ein Überschuss von mindestens 2 Mol-% gegenüber der gesamten Molzahl an (Meth)acrylsäure-Homopolymer- oder Copolymeren gebildet wird.

8. Verfahren nach Anspruch 7, **dadurch gekennzeichnet, dass** es durch Schütteln bei einer Temperatur zwischen 5 °C und 50 °C durchgeführt wird.

## Claims

1. A dispersion and/or grinding aid agent of kaolin in aqueous suspension consisting of a ternary mixture:
a) of at least one homopolymer or copolymer of (meth)acrylic acid, partially or completely neutralized with sodium, with potassium, with lithium and/or with an amine and which has a molecular weight of less than or equal to 7 000 g/mol, as measured by SEC,
b) of at least one solution of silicate or metasilicate chosen from the group consisting of sodium silicate of formula Na₂O.nSiO₂ (with n varying between 1 and 4), sodium metasilicate Na₂SiO₃, potassium silicate K₂O.nSiO₂ (with n varying between 1 and 4), potassium metasilicate K₂SiO₃ and a mixture of these compounds and
c) of at least one base, in an amount such that it is in excess of at least 2 mol% with respect to the theoretical amount of base necessary for the complete neutralization of said homopolymer or copolymer of (meth)acrylic acid,
in which the homopolymer/copolymer:silicate/metasilicate ratio by weight (dry weight) is between 20:80 and 80:20.

2. The agent according to claim 1, according to which said homopolymer or copolymer of (meth)acrylic acid has a molecular weight of less than or equal to 6 000 g/mol, as measured by SEC.

3. The agent according to any one of the preceding claims, according to which said homopolymer or copolymer of (meth)acrylic acid has a PI index of between 1.5 and 3.

4. The agent according to any one of the preceding claims, according to which the amount of base is such that it is in excess of at least 5 mol% with respect to the theoretical amount of base necessary for the complete neutralization of said homopolymer or copolymer of (meth)acrylic acid.

5. The agent according to any one of the preceding claims, according to which said silicate is a sodium silicate of formula Na₂O.2SiO₂.

6. The agent according to any one of the preceding claims, consisting of a ternary mixture of:
a) from 20% to 80% by weight of said at least one homopolymer or copolymer of (meth)acrylic acid, partially or completely neutralized with sodium, with potassium, with lithium and/or with an amine and which has a molecular weight of less than or equal to 7 000 g/mol, as measured by SEC,
b) from 20% to 80% by weight of said at least one solution of silicate or metasilicate chosen from the group consisting of sodium silicate of formula Na₂O.nSiO₂ (with n varying between 1 and 4), sodium metasilicate Na2Si03, potassium silicate K₂O.nSiO₂ (with n varying between 1 and 4), potassium metasilicate K₂SiO₃ and a mixture of these compounds and
c) from 1% to 10% by weight of said at least one base,
in which the homopolymer/copolymer:silicate/metasilicate ratio by weight (dry weight) is between 20:80 and 80:20.

7. A method for the preparation of a dispersion and/or grinding aid agent of mineral materials in aqueous suspension according to any one of claims 1 to 6, comprising the following steps:
a) a base is added to a solution of silicate chosen from the group consisting of sodium silicate of formula Na₂O.nSiO₂ (with n varying between 1 and 4), sodium metasilicate Na2Si03, potassium silicate K₂O.nSiO₂ (with n varying between 1 and 4), potassium metasilicate K₂SiO₃ and a mixture of these compounds and
b) a homopolymer or a copolymer of (meth)acrylic acid, partially or completely neutralized with sodium, with potassium, with lithium and/or with an amine and which has a molecular weight of less than or equal to 7 000 g/mol, as measured by SEC, is introduced into the preceding mixture,
said base being added in an amount such as to be in excess of at least 2 mol% with respect to the total number of moles of homopolymers or copolymers of (meth)acrylic acid.

8. The method according to claim 7, **characterized in that** it is carried out with stirring at a temperature of between 5°C and 50°C.
